# DEMANDE DE BREVET EUROPEEN

(11) **EP 2 607 338 A1**
(43) Date de publication de la demande: **26.06.2013**
(21) Numéro de dépôt: 12198004.9
(22) Date de dépôt: 19.12.2012
(51) Int. Cl.: C06D 5/00, C01B 13/02, F42B 3/04

(54) **Procédé de génération de gaz de combustion à partir d'un matériau solide précurseur d'oxygène et d'un matériau réducteur solide dissociés et dispositif associé**

(30) Priorité: 20.12.2011 FR 1162014
(71) Demandeur: HERAKLES, 33185 Le Haillan (FR)
(72) Inventeur: Mamou, Michaël, 78600 Maisons Laffitte (FR); Humbert, Pierre, 83190 Ollioules (FR); Gibaud, Eric, 78510 Triel Sur Seine (FR)
(74) Mandataire: Le Roux, Martine

(57) **Abrégé**

La présente invention concerne un procédé de génération de gaz de combustion, par réaction entre un matériau réducteur solide (2), agencé dans une chambre de combustion (20), et un gaz oxydant, ladite réaction comprenant la décomposition de la surface du matériau réducteur solide (2) mise au contact du gaz oxydant puis la combustion, dans le volume de ladite chambre de combustion non occupé par le matériau réducteur solide (2), des produits résultant de ladite décomposition avec du gaz oxydant. Ledit procédé est caractérisé en ce que ledit gaz oxydant, renfermant au moins 50 % en volume d'oxygène, est généré extemporanément par décomposition thermochimique d'un matériau solide (1). La présente invention a également pour objet un dispositif convenant à la mise en oeuvre dudit procédé.

## Description

La présente invention a pour objet un procédé de génération de gaz de combustion (gaz chauds), mis en oeuvre à partir de matériaux solides.

La présente invention a également pour objet des utilisations des gaz de combustion générés par ledit procédé et un dispositif de génération de gaz de combustion convenant à la mise en oeuvre dudit procédé.

Les générateurs de gaz de combustion selon l'invention sont particulièrement adaptés pour alimenter des actionneurs à piston équipant notamment des bâtiments ou des navires, ayant par exemple pour fonction de fermer ou d'ouvrir des cloisons ou des vannes. Ils sont aussi adaptés pour gonfler des structures, par exemple dans le cadre de la récupération d'objets immergés. Ils conviennent aussi pour propulser des engins.

Des générateurs de gaz de combustion - gaz chauds utilisés par exemple pour actionner un vérin à piston - ont déjà fait l'objet de plusieurs demandes de brevet.

La demande de brevet FR 2 824 875 concerne un actionneur pyrotechnique à piston. L'actionneur pyrotechnique décrit dans cette demande de brevet comporte un générateur de gaz de combustion renfermant une charge énergétique déjà constituée. Le procédé de génération de gaz en cause repose sur la combustion de ladite charge énergétique préexistante. Cette charge énergétique, en position de stockage (au sein dudit générateur de gaz), est susceptible d'être allumée en combustion sous l'effet d'une sollicitation accidentelle imprévue, comme, par exemple, une montée en température en condition d'incendie.

Dans la suite de la description, l'expression « en position de stockage » correspond à la phase de non fonctionnement du générateur de gaz de combustion.

La demande de brevet FR 2 875 293 concerne un actionneur pyrotechnique qui comporte un générateur de gaz de combustion ; ledit générateur de gaz de combustion renfermant un matériau réducteur solide et un fluide oxydant qui sont initialement séparés. Le procédé de génération de gaz en cause comprend la décomposition en surface (par pyrolyse) du matériau réducteur solide une fois que le fluide oxydant a été mis à son contact (plus précisément au contact d'au moins une partie de sa surface : sa face avant et la surface interne des canaux ménagés dans son volume sur les figures de ladite demande FR 2 875 293) et la combustion des produits de décomposition dudit matériau réducteur avec le fluide oxydant dans une chambre agencée en aval dudit matériau réducteur. Du fait de la séparation desdits matériau réducteur solide et fluide oxydant en position de stockage, le générateur de gaz de combustion ne contient pas de charge énergétique constituée, ce qui lui confère un haut niveau de sécurité. Le matériau réducteur est un solide notamment choisi parmi le polyméthacrylate de méthyle, les polymères thermoplastiques styréniques, les résines artificielles et naturelles, les métaux et les cires. Selon une première variante, le fluide oxydant est liquide et consiste, par exemple, en du peroxyde d'hydrogène ou du nitrate d'hydroxylamine. Selon une deuxième variante, le fluide oxydant est gazeux. De façon préférentielle, le fluide oxydant consiste en un mélange gazeux constitué principalement d'oxygène.

Pour son utilisation, ce type de générateur de gaz de combustion (avec matériau réducteur solide et fluide oxydant séparés) requiert des précautions particulières, tout particulièrement en référence au problème de l'étanchéité du réservoir contenant le fluide oxydant. Ceci implique notamment des opérations de contrôle de l'intégrité dudit réservoir, en position de stockage du générateur de gaz de combustion. Un tel problème est d'autant plus critique que le pouvoir oxydant du fluide est plus fort.

En effet, l'homme du métier n'ignore pas que le stockage d'un fluide à fort pouvoir oxydant, tel que l'oxygène gazeux très pur ou le peroxyde d'hydrogène liquide très concentré, requiert des précautions particulières, en ce qui concerne les matériaux associés (joints, réservoir...). C'est pourquoi le fluide oxydant de ce type de générateur de gaz consiste en fait, le plus souvent, en un mélange présentant un pouvoir oxydant réduit (par rapport à celui de fluides à fort pouvoir oxydant). Sont ainsi limitées les contraintes de manipulation et de stockage.

Le fluide oxydant stocké dans le réservoir est par ailleurs injecté à température ambiante au contact du matériau réducteur solide. L'injection d'un fluide oxydant à pouvoir oxydant réduit, mise en oeuvre à température ambiante, impose alors l'utilisation de systèmes d'allumage renforcés, nécessitant par exemple un préchauffage du matériau réducteur solide pour initier la réaction de décomposition.

A ce jour, l'homme du métier est toujours à la recherche d'un procédé de génération de gaz de combustion (chauds) susceptible d'être mis en oeuvre dans un générateur de gaz ne présentant pas de danger lié à la présence d'une charge énergétique constituée, en position de stockage (dudit générateur) et ne présentant pas non plus de risque de fuite ou d'explosion lié au stockage d'un liquide ou d'un gaz sous pression permanente. Il cherche aussi à utiliser des oxydants forts comme comburants de combustion tout en minimisant les contraintes liées à leur stockage et à leur manipulation.

Par ailleurs, il est connu d'utiliser des composés agglomérés solides générateurs d'oxygène par décomposition thermochimique, aussi appelés chandelles à oxygène, pour une distribution contrôlée d'oxygène en assistance respiratoire. Ces composés contiennent :
- un chlorate ou un perchlorate comme source d'oxygène, tel que le chlorate de sodium ou le perchlorate de potassium,
- un composé combustible, tel que du magnésium ou du fer, et
- un catalyseur, tel que du bioxyde de manganèse.

Le gaz produit par la décomposition thermochimique de ce type de composés agglomérés solides l'est typiquement à une température de 600°C. Ledit gaz produit est filtré dans un filtre chimique pour être débarrassé de ses impuretés. Il renferme, après filtration, plus de 99,8 % en volume d'oxygène.

Les demandes de brevet FR 1 142 360 et FR 2 620 435 décrivent de tels composés solides aptes à générer de l'oxygène par décomposition thermochimique.

On conçoit que la qualité de l'oxygène délivré - oxygène utilisé en assistance respiratoire ou non - est variable en fonction de la composition des composés solides précurseurs, de la présence ou non de filtres...

La Demanderesse commercialise de tels composés solides, notamment sous la dénomination OR 3000^{®}. Ces chandelles OR 3000^{®}, présentant une section carrée de 140 mm de côté et une hauteur de 400 mm, sont aptes à débiter 3000 litres de gaz (renfermant au moins 99,6 % en volume d'oxygène) en 30 minutes. Bien entendu, le débit de la chandelle peut être adapté en modifiant la géométrie et/ou la composition de ladite chandelle (notamment en modifiant le taux massique du composé combustible présent dans sa composition).

Le brevet US 4 101 291 décrit également des chandelles à oxygène. La composition desdites chandelles comprend une substance réfractaire (un liant, tel de l'argile), un élément oxydant (un chlorate, par exemple) et un carburant (coke ou houille, par exemple). Ces chandelles sont proposées à titre de perfectionnement à des chandelles conventionnelles renfermant, dans leur composition, des fibres de verre à titre de liant, un chlorate à titre d'élément oxydant et de la poudre de fer à titre de carburant.

L'homme du métier comprend que l'oxygène, de plus ou moins grande pureté, généré par des chandelles à oxygène, présente des propriétés corrosive et d'inflammabilité (notamment avec les métaux, les graisses...) rendant son utilisation inappropriée pour la pressurisation d'enceintes (notamment dans le but d'alimenter un actionneur à piston, de gonfler une structure ou de propulser un engin).

Dans un autre contexte, le brevet GB 1 393 912 décrit un chalumeau, pour la découpe d'éléments métalliques. La structure de ce chalumeau comprend une première chambre renfermant un générateur solide d'oxygène apte à débiter dans le canal central d'un bloc de matériau réducteur solide contenu dans une deuxième chambre munie d'un orifice de sortie (ledit bloc occupant tout le volume de ladite deuxième chambre). Le gaz débité dans la deuxième chambre balaie la surface du canal du bloc de matériau réducteur solide (la surface interne dudit bloc), entraînant sa décomposition. Le jet du chalumeau, en sortie de l'orifice de la deuxième chambre, est constitué d'une partie périphérique essentiellement constituée de gaz réducteur issu des produits de décomposition du matériau réducteur et d'une partie centrale riche en oxygène issue du générateur solide d'oxygène ; ladite partie périphérique servant à réchauffer l'élément métallique à découper et ladite partie centrale à assurer sa combustion pour sa découpe.

Dans un tel contexte, la Demanderesse propose un procédé de génération de gaz de combustion (gaz chauds) et son dispositif associé, tous deux particulièrement intéressants en référence aux problèmes, évoqués ci-dessus, rencontrés avec les procédés et dispositifs existants.

Selon son premier objet, la présente invention concerne donc un procédé de génération de gaz de combustion par réaction entre un matériau réducteur solide, agencé dans une chambre de combustion, et un gaz oxydant. La réaction en cause comprend la décomposition de la surface du matériau réducteur solide mise au contact du gaz oxydant puis la combustion, dans le volume de la chambre de combustion non occupé par le matériau réducteur solide (volume libre), des produits résultant de ladite décomposition avec du gaz oxydant. En cela, le procédé de génération de gaz de combustion de l'invention peut être considéré comme un procédé du type de celui décrit dans la demande de brevet FR 2 875 293. Toutefois, ledit procédé de génération de gaz de combustion selon l'invention, basé sur la réaction entre un matériau réducteur solide et un gaz oxydant, comprend, de façon caractéristique, en amont de ladite réaction, la génération extemporanée du gaz oxydant, renfermant au moins 50 % en volume d'oxygène, par décomposition thermochimique d'un matériau solide.

Ledit gaz oxydant, généré par décomposition thermochimique dudit matériau solide, peut renfermer au moins 80 % en volume d'oxygène, avantageusement au moins 90 % en volume d'oxygène.

Il n'est pas exclu du cadre de l'invention de soumettre ledit gaz oxydant généré (renfermant au moins 50 % en volume d'oxygène) à une étape de filtration, notamment au moyen d'un filtre chimique (du type de ceux présents dans des chandelles à oxygène de l'art antérieur) pour le débarrasser de ses impuretés et donc d'augmenter sa teneur en volume d'oxygène. Cette teneur est ainsi susceptible d'atteindre plus de 99,8 % en volume.

La génération de gaz de combustion, selon le procédé de l'invention, est obtenue, de façon caractéristique, par réaction entre un matériau réducteur solide et un gaz oxydant à fort pouvoir oxydant (puisque renfermant au moins 50 % en volume d'oxygène) généré extemporanément par décomposition thermochimique d'un matériau solide. Le gaz oxydant ainsi généré extemporanément est consommé par la réaction (décomposition + combustion) qui produit des gaz de combustion présentant une composition relativement homogène.

Un tel procédé est particulièrement avantageux en ce qu'il utilise ni charge énergétique préexistante, ni fluide oxydant stocké dans un réservoir. Il utilise deux matériaux solides : de façon conventionnelle, le matériau réducteur solide, et de façon originale, le matériau solide précurseur d'un gaz oxydant, plus précisément ledit matériau solide apte à se décomposer thermo-chimiquement en générant un gaz oxydant renfermant au moins 50 % en volume d'oxygène. Ledit procédé présente donc l'avantage de ne mettre le dispositif utile à sa mise en oeuvre en présence d'oxygène que pendant sa phase de fonctionnement. Le gaz oxydant est par ailleurs consommé au fur et à mesure de sa génération ou avec seulement un léger décalage dans le temps (voir ci-après l'intervention éventuelle du réservoir tampon). Des problèmes associés au stockage du gaz oxydant ne se posent donc pas. Par ailleurs :
- le gaz oxydant renferme au moins 50 % en volume d'oxygène et présente donc un fort pouvoir oxydant ; et
- le gaz oxydant est généré à haute température et l'intervention d'un gaz oxydant chaud au contact du matériau réducteur solide est opportune pour initier la réaction.

Le procédé de l'invention peut être mis en oeuvre selon diverses variantes.

Dans le cadre de la mise en oeuvre d'une première variante, le gaz oxydant généré (par décomposition thermochimique d'un matériau solide précurseur) est délivré directement au contact d'au moins une partie de la surface (surface externe + surface interne) du matériau réducteur solide. Sa haute température (environ 600°C (voir ci-dessus)) facilite grandement l'initiation de la combustion dudit matériau réducteur solide.

Dans le cadre de la mise en oeuvre d'une autre variante, le gaz oxydant généré (par décomposition thermochimique d'un matériau solide précurseur) transite par un réservoir tampon avant sa délivrance au contact d'au moins une partie de la surface (surface externe + surface interne) du matériau réducteur solide et au moins la première partie dudit gaz oxydant généré est accumulée, au maximum quelques secondes, dans ledit réservoir tampon.

Un tel « stockage » d'au moins la première partie du gaz oxydant généré dans un réservoir tampon (« stockage » de tout le gaz généré ou seulement d'une première partie de celui-ci), s'il est préjudiciable en référence à la température dudit gaz (qui toutefois demeure généralement supérieure à la température ambiante), est intéressant en ce qu'il permet de réguler le débit de délivrance dudit gaz au contact (d'au moins une partie) de la surface du matériau réducteur solide, et ce indépendamment des conditions, notamment du débit de génération dudit gaz par le matériau solide précurseur en décomposition thermochimique. Ce « stockage » intermédiaire, temporaire (en fait, pendant un temps très court, d'au maximum quelques secondes (≤10 s), voire d'une seconde), dans un réservoir tampon, d'au moins la première partie du gaz oxydant généré par le matériau solide (gaz oxydant refermant au moins 50 % en volume d'oxygène), avant sa mise au contact avec le matériau réducteur solide dans la chambre de combustion, est évidemment bien moins exigeant, en termes d'architecture de dispositif, qu'un stockage « permanent » d'un oxydant fort.

La délivrance du gaz oxydant généré au contact d'au moins une partie de la surface du matériau réducteur solide (délivrance directe ou *via* un réservoir tampon), pour sa réaction avec ledit matériau réducteur solide, peut être mise en oeuvre de façon régulière ou modulée. Une telle délivrance, via l'utilisation de vanne(s), est à la portée de l'homme du métier.

Le procédé de l'invention, mis en oeuvre selon la deuxième variante explicitée ci-dessus - avec « stockage » intermédiaire d'au moins la première partie du gaz oxydant généré dans un réservoir tampon - peut comporter en outre le largage du matériau solide précurseur ayant au moins en partie, généralement en totalité, été décomposé pour générer le gaz oxydant. Ledit matériau solide, en partie (on ne saurait totalement exclure un arrêt de la décomposition thermochimique du matériau solide précurseur « surdimensionné » après production d'une quantité de gaz suffisante), généralement en totalité, décomposé, est ainsi largué, avec son contenant. Ce mode de fonctionnement avec largage du matériau solide après son utilisation (matériau solide ayant au moins en partie réagi et son contenant) est avantageux lorsque l'on cherche à minimiser la masse du dispositif utilisé pour la mise en oeuvre du procédé, par exemple pour des opérations de gonflage de ballons de récupération ou d'objets immergés ou des opérations de propulsion.

L'allumage (le démarrage) de la réaction entre le gaz oxydant (généré extemporanément) et le matériau réducteur solide peut être spontané ou provoqué. Ledit allumage peut ainsi être provoqué par un apport thermique et/ou un préchauffage dudit matériau réducteur solide. L'homme du métier saura déterminer si l'allumage de la réaction doit être provoqué, en fonction de la teneur en oxygène du gaz oxydant, de la température du gaz oxydant lors de la mise en contact de celui-ci avec la surface du matériau réducteur, de la nature du matériau réducteur, des exigences de celui-ci en termes de délais d'allumage.

Les gaz de combustion générés selon le procédé de l'invention peuvent être, si nécessaire (cela dépend bien évidemment du contexte exact de leur utilisation) refroidis. Ils peuvent notamment être refroidis par circulation dans un échangeur de chaleur ou par mélange avec un fluide de refroidissement, comme décrit dans la demande de brevet FR 2 875 293. Ce refroidissement peut être nécessaire, par exemple lorsqu'il s'agit de gonfler une structure susceptible d'être endommagée par des gaz à trop haute température.

On se propose maintenant de préciser quelques caractéristiques de matériaux solides convenant aux fins de la mise en oeuvre du procédé de l'invention. Lesdits matériaux solides, précurseur d'oxygène, d'une part et réducteur, d'autre part, peuvent notamment consister en les matériaux connus dont il a été question dans l'introduction du présent texte.

Le matériau solide précurseur du gaz oxydant, plus précisément apte à se décomposer thermo-chimiquement en générant un gaz oxydant renfermant au moins 50 % en volume d'oxygène, consiste avantageusement en le matériau constitutif des chandelles à oxygène de l'art antérieur, chandelles aptes à générer de l'oxygène plus ou moins pur. Il renferme donc avantageusement, comme source d'oxygène, un chlorate ou un perchlorate. Notons incidemment qu'un mélange chlorate/perchlorate ne saurait être exclu. Ledit chlorate ou perchlorate est un chlorate ou perchlorate de métal alcalin, avantageusement de lithium, sodium ou potassium. Il consiste très avantageusement en du perchlorate de potassium ou du chlorate de sodium, ce dernier composé étant particulièrement préféré.

Le matériau réducteur solide présente avantageusement la forme d'un bloc cylindrique, traversé longitudinalement par au moins un canal. L'homme du métier connait l'intérêt de ce type de géométrie pour la réaction dudit matériau avec un gaz oxydant (réaction comprenant une décomposition en surface). Le matériau réducteur solide présente très avantageusement la forme d'un bloc cylindrique traversé longitudinalement par un canal central, ledit canal central présentant au moins trois rainures longitudinales, parallèles entre elles et régulièrement réparties autour dudit canal central ou la forme d'un bloc cylindrique traversé longitudinalement par sept canaux parallèles entre eux, dont l'un est en position centrale et dont les six autres sont régulièrement disposés autour dudit canal central et sont équidistants de celui-ci. Ces deux géométries particulièrement avantageuses ont été respectivement illustrées sur les figures 8 et 9 de la demande de brevet FR 2 875 293.

Avantageusement, le matériau réducteur solide consiste essentiellement en un polymère hydrocarboné (tel un polyuréthane, un polyéthylène, un polyméthacrylate, un polyisoprène, un polymère styrénique), en une résine artificielle ou naturelle, ou en une cire.

Le procédé de l'invention, tel que décrit ci-dessus, est opportunément (on a détaillé ci-dessus le grand intérêt à utiliser le matériau solide spécifique pour la génération extemporanée du gaz oxydant, à fort pouvoir oxydant) mis en oeuvre pour générer des gaz utilisés pour, de manière générale, pressuriser une enceinte, et pour, plus particulièrement, notamment, alimenter un actionneur à piston, gonfler une structure ou propulser un engin.

Selon son dernier objet, la présente invention concerne un dispositif de génération de gaz de combustion ou générateur de gaz de combustion convenant à la mise en oeuvre du procédé de génération de gaz de combustion décrit ci-dessus. Ledit dispositif renferme les matériaux solides, précurseur du gaz oxydant, d'une part et réducteur, d'autre part, ainsi que des moyens adéquats pour générer ledit gaz oxydant à partir dudit matériau solide précurseur et pour mettre en oeuvre la réaction entre ledit matériau solide réducteur et ledit qaz oxydant. Ledit dispositif comprend :
- une enceinte, renfermant le matériau solide apte à se décomposer thermo-chimiquement en générant un gaz oxydant renfermant au moins 50 % en volume d'oxygène, équipée de moyens d'initiation de la décomposition thermochimique dudit matériau solide et de moyens de délivrance du gaz oxydant généré ; et
- une chambre de combustion, reliée à ladite enceinte via des moyens de communication ; ladite chambre de combustion renfermant, dans une partie de son volume, avantageusement dans la partie de son volume dans laquelle débouchent lesdits moyens de communication, le matériau réducteur solide, et étant équipée de moyens d'échappement des gaz de combustion et éventuellement d'un système d'allumage.

Le matériau solide précurseur du gaz oxydant est positionné dans une enceinte, agencée en amont de la chambre de combustion (renfermant le matériau réducteur). Ladite enceinte est équipée de moyens pour initier la décomposition thermochimique dudit matériau solide précurseur du gaz oxydant. De tels moyens consistent avantageusement en une amorce pyrotechnique à déclenchement manuel ou commandé. Ladite enceinte est également équipée de moyens pour délivrer le gaz oxydant généré. De tels moyens comprennent avantageusement au moins une ouverture (voir ci-après) et ils sont éventuellement associés à des moyens de filtration dudit gaz oxydant généré. Une telle au moins une ouverture, généralement une telle ouverture, est susceptible de déboucher directement dans la chambre de combustion. Une telle ouverture débouche généralement dans une canalisation. Selon une première variante, ladite canalisation relie lesdites enceinte et chambre de combustion. Selon une autre variante, ladite canalisation relie ladite enceinte à un réservoir et une seconde canalisation relie ledit réservoir à ladite chambre de combustion. Le réservoir en cause est le réservoir tampon dont il a été question pour la mise en oeuvre d'une variante du procédé explicitée ci-dessus. Sur ladite canalisation présente ou sur chacune desdites deux canalisations présentes, est opportunément agencée une vanne, pour la maitrise (la régulation) du flux gazeux délivré.

Si le dispositif de l'invention comprend un réservoir tampon, il peut comprendre, en outre, sur la (première) canalisation reliant l'enceinte audit réservoir, un sectionneur. Un tel sectionneur est avantageusement agencé en amont de la vanne équipant ladite canalisation, si une telle vanne est présente. Un tel sectionneur est apte à assurer le largage de l'enceinte (après la génération du fluide oxydant).

On note incidemment ici que le dispositif de l'invention peut en fait exister selon de nombreuses variantes en référence aux liaisons enceinte/chambre de combustion, enceinte/réservoir/chambre de combustion. A partir de plusieurs ouvertures de l'enceinte, plusieurs canalisations peuvent relier ladite enceinte à ladite chambre de combustion, voire même audit réservoir ; ledit réservoir étant alors relié à ladite chambre de combustion via une ou plusieurs canalisations. Il peut notamment se révéler opportun de délivrer le gaz oxydant en plusieurs points de la chambre de combustion.

Pour ce qui concerne la chambre de combustion, elle renferme le matériau réducteur solide et elle est équipée de moyens pour l'échappement, la délivrance, des gaz de combustion générés. Ladite chambre de combustion renferme ledit matériau réducteur solide dans une partie de son volume seulement (on laisse ainsi un volume libre, dans la chambre de combustion, pour la combustion des produits résultant de la décomposition du matériau réducteur solide avec le gaz oxydant). Avantageusement, ledit matériau réducteur solide est positionné dans la partie du volume de la chambre de combustion où débouchent les moyens de communication entre l'enceinte et ladite chambre de combustion (on vise ainsi à assurer un contact gaz oxydant généré le plus chaud possible/surface du matériau réducteur solide, i.e. à optimiser la décomposition de ladite surface par ledit gaz oxydant). On a compris que lorsqu'une unique canalisation débouche dans la chambre de combustion, le matériau réducteur solide est avantageusement positionné à proximité de l'embouchure de ladite unique canalisation et que lorsque plusieurs canalisations débouchent dans la chambre de combustion, le matériau réducteur solide est avantageusement positionné au plus près des embouchures de celles-ci. Très avantageusement, la(les) canalisation(s) débouche(nt) directement sur la surface du matériau réducteur solide. On vise, dans le cadre de ces variantes avantageuses, une délivrance du gaz oxydant (chaud) au plus près du matériau réducteur solide.

Au niveau des moyens d'échappement peuvent être prévus des moyens de refroidissement des gaz (un échangeur de chaleur, par exemple). On a vu ci-dessus qu'un tel refroidissement des gaz peut être nécessaire dans certains contextes d'utilisation desdits gaz.

La chambre de combustion peut aussi être équipée d'un système d'allumage (allumage de la réaction). Un tel système d'allumage est nécessaire si l'allumage entre le gaz oxydant et le matériau réducteur solide n'est pas spontané. Il peut aussi être prévu dans des contextes d'allumages spontanés possibles mais où l'on désire maîtriser le délai d'allumage.

Le procédé de l'invention utilisant un gaz oxydant qui renferme au moins 50 % en volume d'oxygène, l'initiation de la réaction entre le matériau réducteur et ce gaz oxydant est spontanée ou nécessite, en tout état de cause, une faible énergie. Le système d'allumage éventuellement requis est donc moins énergétique que celui décrit dans la demande de brevet FR 2 875 293. On a vu par ailleurs que la température du gaz oxydant, supérieure (voire très supérieure) à la température ambiante, facilite l'initiation de la réaction de combustion avec le matériau réducteur.

Pour ce qui concerne le système d'allumage (éventuellement requis), on peut préciser, de façon nullement limitative, ce qui suit. Ledit système d'allumage peut comprendre, de façon conventionnelle, un initiateur pyrotechnique et une charge pyrotechnique relais. Ceux-ci sont généralement mis à feu, pour initier la réaction, dans les premiers instants de la délivrance du gaz oxydant. Le système d'allumage utilisé peut aussi avoir pour fonction de chauffer la surface du matériau solide réducteur (appelée à contacter le gaz oxydant) et la chambre de combustion, préalablement à la délivrance du gaz oxydant, notamment lorsque ce gaz oxydant est « stocké » de façon intermédiaire dans le réservoir avant d'être délivré dans ladite chambre de combustion (i.e. lorsque ce gaz oxydant est susceptible de se refroidir par rapport à la température (600°C) à laquelle il est généré par le matériau solide précurseur).

Les générateurs de gaz de combustion selon l'invention présentent l'avantage d'être autonomes et d'avoir un encombrement réduit grâce à une grande simplicité de conception. Ils peuvent donc être facilement insérés dans n'importe quel type de dispositif ou d'objet nécessitant l'utilisation de gaz de combustion. Ils présentent, de plus, l'avantage de ne contenir en position de stockage que des matériaux solides, et ne nécessitent donc pas de contrôle particulier (normalement requis en présence de réservoir contenant un fluide gazeux ou liquide en position de stockage).

On se propose maintenant d'illustrer l'invention, de façon nullement limitative, sous ses aspects de procédé et de dispositif, par les figures annexées et l'exemple ci-après.
La figure 1 est une représentation schématique d'une première variante de réalisation d'un générateur de gaz de combustion (gaz chauds) selon l'invention (dispositif convenant pour la mise en oeuvre du procédé de l'invention).
La figure 2 est une représentation schématique d'une deuxième variante de réalisation d'un générateur de gaz de combustion (gaz chauds) selon l'invention (dispositif convenant pour la mise en oeuvre du procédé de l'invention).

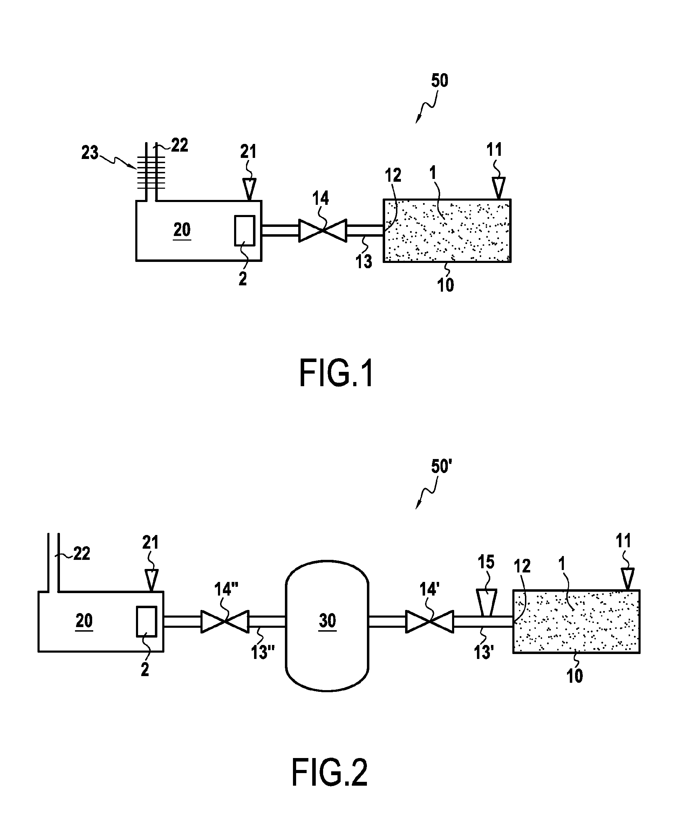

On a montré, sur la figure 1, un dispositif 50 de l'invention qui comprend :
- en 10, une enceinte renfermant le matériau solide précurseur du gaz oxydant 1 ; ladite enceinte 10 étant équipée de moyens d'initiation 11 (amorce pyrotechnique électrique ou à percussion éventuellement commandée) de la décomposition thermochimique dudit matériau 1 ; ladite enceinte 10 débouchant via son ouverture 12 dans la canalisation 13 ;
- en 20, la chambre de combustion renfermant le matériau réducteur solide 2 ; ladite chambre de combustion étant équipée d'un système d'allumage 21 et de moyens d'échappement des gaz (de combustion) 22. Autour desdits moyens d'échappement des gaz 22 sont agencés des moyens de refroidissement 23 ;
- en 14, une vanne montée sur la canalisation 13 reliant directement les chambres 10 et 20.

Ledit dispositif 50 fonctionne comme suit : le gaz oxydant produit par la décomposition thermochimique du matériau précurseur 1 est directement introduit au contact de la surface du matériau réducteur solide 2, *via* la canalisation 13. Le matériau réducteur solide 2 n'occupe qu'une partie du volume de la chambre de combustion 20 et il est opportunément positionné à proximité de l'embouchure de ladite canalisation 13. Les produits de décomposition brûlent dans le volume libre de la chambre de combustion 20.

Sur la figure 2, on a montré un dispositif 50' de l'invention. Les éléments communs aux deux dispositifs 50 et 50' de l'invention ont été identifiés par les mêmes références.

Le dispositif 50' montré sur la figure 2 comprend une enceinte 10 renfermant un matériau solide 1 précurseur du gaz oxydant et son moyen d'initiation 11 (amorce pyrotechnique électrique ou à percussion éventuellement commandée), un réservoir 30 destiné à stocker de façon intermédiaire le gaz oxydant produit par le matériau solide précurseur de gaz oxydant 1, une chambre de combustion 20 contenant (dans une partie de son volume seulement) un bloc solide réducteur 2 et munie d'un système d'allumage 21 et d'une tubulure d'échappement 22 des gaz chauds de combustion. L'enceinte 10 contenant le matériau solide 1 précurseur du gaz oxydant est reliée par une canalisation 13' munie d'une vanne commandée 14' au réservoir 30, et ledit réservoir 30 (de gaz oxydant) comporte lui-même une canalisation d'échappement 13" munie d'une vanne de régulation 14" permettant de le relier à la chambre de combustion 20. Dans ladite chambre de combustion 20, le bloc solide réducteur 2 est opportunément positionné à proximité de l'embouchure de ladite canalisation 13".

La canalisation 13' reliant l'enceinte 10 contenant le matériau solide 1 précurseur du gaz oxydant est munie d'un sectionneur pyrotechnique 15, permettant de larguer ladite enceinte 10 contenant le matériau oxydant solide 1 décomposé (au moins en partie), après le remplissage du réservoir 30. Cette variante permet de délester le dispositif 50' de la masse de l'enceinte 10 contenant le matériau solide oxydant 1 ayant réagi pendant la production des gaz de combustion.

Le mode de fonctionnement de ce dispositif 50' suit les étapes suivantes. Un signal électrique provoque l'allumage du matériau solide précurseur de gaz oxydant 1 et l'ouverture de la vanne 14' reliant l'enceinte 10 contenant ledit matériau solide 1 au réservoir 30. Le réservoir 30 se remplit alors de gaz oxydant (renfermant au moins 50 % en volume d'oxygène). Un second signal électrique ferme la vanne 14' et déclenche le sectionneur 15 permettant ainsi de larguer l'enceinte 10 contenant le matériau solide 1 ayant réagi. Un troisième signal électrique ouvre la vanne 14" de la canalisation d'échappement 13" du réservoir 30 de gaz oxydant pour délivrer à débit contrôlé le gaz oxydant dans la chambre de combustion 20 et initie le système d'allumage 21. Il se produit alors la réaction entre ledit gaz oxydant et le bloc réducteur 2 : décomposition (par pyrolyse) de la surface dudit bloc 2 au contact dudit gaz oxydant et combustion des produits de ladite décomposition dans le volume libre de la chambre de combustion 20. Les gaz de combustion issus de cette réaction mettent en pression la chambre de combustion 20. Une vanne pyrotechnique (non représentée) de la tubulure d'échappement 22 est déclenchée par un signal électrique pour permettre aux gaz chauds de s'échapper et de s'introduire par exemple dans une structure gonflable ou dans une chambre de pressurisation d'un piston.

L'exemple 1 ci-après précise le dimensionnement d'un dispositif 50' de l'invention selon la figure 2 et indique les performances d'un tel dispositif.
- Matériau réducteur utilisé : Cariflex^{®} (polymère styrénique)
- Dimensions du bloc cylindrique 2 de matériau réducteur :
   L=30 mm, D=50 mm, Diamètre canal central=30 mm
- Réchauffeur et allumeur 21 : 0,45 g de poudre de KNO₃/bore et un bloc de propergol de 1,05 g
- Volume libre de la chambre de combustion 20 : 37,5 cm³
- Matériau solide oxydant 1 : OR 3000^{®} de SME, dimensions :
   hauteur 13,2 mm, section 140 mm x 140 mm. Quantité d'oxygène (la chandelle OR 3000^{®}, équipée d'un filtre chimique, débite un gaz oxydant renfermant plus de 99,8 % en volume d'oxygène) produite : 100 I normaux en 1 minute
- Remplissage dans un réservoir 30 de 0,5 I à 200 bars
- Stockage pendant environ 3 s de l'oxygène dans le réservoir 30 (durée de stockage correspondant au temps de fermeture de la vanne 14' et à celui de l'ouverture de la vanne 14")
- Délivrance de l'oxygène à partir du réservoir 30 : 0,0455 I à 200 bars pendant 11 s
- Gonflage d'une structure de 81 I à 2 bars ou 1,62 I à 100 bars *via* la tubulure d'échappement 22.

## Revendications

1. Procédé de génération de gaz de combustion, par réaction entre un matériau réducteur solide (2), agencé dans une chambre de combustion (20), et un gaz oxydant, ladite réaction comprenant la décomposition de la surface du matériau réducteur solide (2) mise au contact du gaz oxydant puis la combustion, dans le volume de ladite chambre de combustion non occupé par le matériau réducteur solide (2), des produits résultant de ladite décomposition avec du gaz oxydant, **caractérisé en ce que** ledit gaz oxydant, renfermant au moins 50 % en volume d'oxygène, est généré extemporanément par décomposition thermochimique d'un matériau solide (1).

2. Procédé selon la revendication 1, **caractérisé en ce que** ledit gaz oxydant généré renferme au moins 80 % en volume d'oxygène, avantageusement au moins 90 % en volume d'oxygène.

3. Procédé selon la revendication 1 ou 2, **caractérisé en ce que** ledit gaz oxydant généré est délivré directement au contact d'au moins une partie de la surface dudit matériau réducteur solide (2).

4. Procédé selon la revendication 1 ou 2, **caractérisé en ce que** ledit gaz oxydant généré transite par un réservoir tampon (30) avant sa délivrance au contact d'au moins une partie de la surface dudit matériau réducteur solide (2) et **en ce qu'**au moins la première partie dudit gaz oxydant généré est accumulée, au maximum quelques secondes, dans ledit réservoir tampon (30).

5. Procédé selon l'une quelconque des revendications 1 à 4, **caractérisé en ce que** ledit gaz oxydant généré est délivré de façon régulière ou modulée.

6. Procédé selon la revendication 4 ou 5, **caractérisé en ce qu'il** comprend en outre le largage dudit matériau solide (1) ayant au moins en partie, avantageusement en totalité, été décomposé pour générer ledit gaz oxydant.

7. Procédé selon l'une quelconque des revendications 1 à 6, **caractérisé en ce qu'il** comprend en outre le refroidissement des gaz de combustion générés.

8. Procédé selon l'une quelconque des revendications 1 à 7, **caractérisé en ce que** ledit matériau solide (1) renferme, comme source d'oxygène, un chlorate ou un perchlorate, avantageusement du chlorate de sodium.

9. Procédé selon l'une quelconque des revendications 1 à 8, **caractérisé en ce que** ledit matériau réducteur solide (2) présente la forme d'un bloc cylindrique, traversé longitudinalement par au moins un canal.

10. Procédé selon la revendication 9 **caractérisé en ce que** ledit bloc est traversé longitudinalement par un canal central présentant au moins trois rainures longitudinales, parallèles entre elles et régulièrement réparties autour dudit canal central.

11. Procédé selon la revendication 9 **caractérisé en ce que** ledit bloc est traversé longitudinalement par sept canaux parallèles entre eux, dont l'un est en position centrale et dont les six autres sont régulièrement disposés autour dudit canal central et sont équidistants de celui-ci.

12. Procédé selon l'une quelconque des revendications 1 à 11, **caractérisé en ce que** ledit matériau réducteur solide (2) consiste essentiellement en un polymère hydrocarboné, en une résine artificielle ou naturelle, ou en une cire.

13. Utilisation des gaz générés selon le procédé de l'une quelconque des revendications 1 à 12 pour pressuriser une enceinte, notamment dans le but d'alimenter un actionneur à piston, de gonfler une structure ou de propulser un engin.

14. Dispositif de génération de gaz de combustion (50 ; 50') convenant à la mise en oeuvre du procédé selon l'une quelconque des revendications 1 à 12, **caractérisé en ce qu'il** comprend :
- une enceinte (10), renfermant un matériau solide (1) apte à se décomposer thermo-chimiquement en générant un gaz oxydant renfermant au moins 50 % en volume d'oxygène, équipée de moyens d'initiation (11) de la décomposition thermochimique dudit matériau solide (1) et de moyens de délivrance (12) du gaz oxydant généré ; et
- une chambre de combustion (20), reliée à ladite enceinte (10) *via* des moyens de communication (13 ; 13', 13") ; ladite chambre de combustion (20) renfermant, dans une partie de son volume, avantageusement dans la partie de son volume où débouchent lesdits moyens de communication (13 ; 13"), un matériau réducteur solide (2), et étant équipée de moyens d'échappement (22) des gaz de combustion et éventuellement d'un système d'allumage (21).

15. Dispositif (50) selon la revendication 14, **caractérisé en ce que** lesdits moyens de communication comprennent une canalisation (13), avantageusement équipée d'une vanne (14), reliant lesdites enceinte (10) et chambre de combustion (20).

16. Dispositif (50') selon la revendication 14, **caractérisé en ce qu'il** comprend en outre un réservoir (30) agencé entre lesdites enceinte (10) et chambre de combustion (20) ; une première canalisation (13'), avantageusement équipée d'une vanne (14'), reliant ladite enceinte (10) et ledit réservoir (30) et une seconde canalisation (13"), avantageusement équipée d'une vanne (14"), reliant ledit réservoir (30) et ladite chambre de combustion (20).

17. Dispositif (50') selon la revendication 16, **caractérisé en ce qu'il** comprend en outre un sectionneur (15) agencé sur ladite première canalisation (13').

18. Dispositif (50 ; 50') selon l'une quelconque des revendications 14 à 17, **caractérisé en ce qu'il** comprend en outre des moyens de refroidissement (23) des gaz de combustion générés agencés au niveau des moyens d'échappement (22) desdits gaz de combustion équipant ladite chambre de combustion (20).
